Europäisches Patentamt

European Patent Office

Office européen des brevets

(11) Veröffentlichungsnummer: **0 123 890**
A2

(12) **EUROPÄISCHE PATENTANMELDUNG**

(21) Anmeldenummer: **84103286.5**

(22) Anmeldetag: **24.03.84**

(51) Int. Cl.³: **H 04 M 3/42,** H 04 Q 3/47, H 04 M 3/54, H 04 M 1/65

(30) Priorität: **02.05.83 DE 3315899**

(43) Veröffentlichungstag der Anmeldung: **07.11.84 Patentblatt 84/45**

(84) Benannte Vertragsstaaten: **AT BE IT**

(71) Anmelder: **Telefonbau und Normalzeit GmbH, Mainzer Landstrasse 128-146 Postfach 4432, D-6000 Frankfurt (Main) (DE)**

(72) Erfinder: **Schnabel, Harald, Hamburger Strasse 1-3, D-6236 Eschborn (DE)**

(74) Vertreter: **Portwich, Peter, Mainzer Landstrasse 128-146, D-6000 Frankfurt/Main (DE)**

(54) **Verfahren zur Zuordnung von Anschlussdaten für Fernsprechteilnehmeranschlüsse.**

(57) Verfahren zur Zuordnung von Anschlußdaten für Fernsprechteilnehmeranschlüsse besteht darin, daß im Fernsprechapparat Speichermittel eingebaut oder vorübergehend eingebracht werden, die die eigene Rufnummer des Teilnehmers und weitere Teilnehmerdaten enthalten. Diese Teilnehmerinformation wird entweder über besondere Leitungen oder je nach Anschlußart in besonderen Zeitkanälen unabhängig von Wähl- und Sprachinformationen zur Vermittlungsanlage übertragen. Dies geschieht durch ein Abrufsignal von der Vermittlungsanlage aus oder durch ein Eingabesignal vom Fernsprechapparat aus. Mit diesem Verfahren können Merkmale die Rufnummernzuordnung, Rufumleitung usw. in einer Vermittlungsanlage verwirklicht werden, ohne daß an zentraler Stelle Eingriffe notwendig sind. Die dazu notwendigen Bedienungsprozeduren werden ausschließlich an den Fernsprechapparaten selbst durchgeführt.

Telefonbau und Normalzeit GmbH, 6000 Frankfurt am Main
Mainzer Landstrasse 128 - 146

Verfahren zur Zuordnung von Anschlußdaten für Fernsprechteilnehmeranschlüsse

---

Die Erfindung betrifft ein Verfahren zur Zuordnung von
Anschlußdaten für Fernsprechteilnehmeranschlüsse, wobei
Fernsprechapparate mit eigenen elektronischen Speicher-
und Steuereinrichtungen an zentral gesteuerte Vermittlungsanlagen angeschlossen sind.

Es ist bekannt, in Fernsprechapparaten Speicher- und
Steuereinrichtungen anzuordnen, um das automatische Aussenden von Wahlinformation zu steuern. Dabei kann es
sich darum handeln, daß mit Tasten eingegebene Ziffern
einer Rufnummer in Impulsserien unterschiedlicher Länge
umgesetzt werden, oder daß in einem Speicher abgelegte
komplette Rufnummern als Wahlinformation ausgesendet werden
soll. Ein derartig ausgestalteter Tastwahlfernsprechapparat ist beschrieben in der DE-OS 25 52 447. Mit den
Mitteln einer elektronischen Rufnummernspeicherung soll
einem Fernsprechteilnehmer das Aufbauen häufig verlangter
Verbindungen dadurch erleichtert werden, daß in einem
elektronischen Rufnummernhauptspeicher eingespeicherte
Rufnummern durch einfache Tastenbetätigungen abrufbar sind.
Die in diesem Anwendungsfall vorgesehenen Speicher dienen
also ausschließlich dazu, daß mit ihrem Inhalt ein Verbindungsaufbau erfolgen kann.

Es ist außerdem bekannt, Kennzeichen von Teilnehmerstellen
nach dem Aufbau einer Verbindung zur jeweiligen Gegenstelle zu übertragen um sie dort anzuzeigen, damit ein Teilnehmer erkennen kann, zu welcher Teilnehmerstelle eine Verbindung besteht. Ein Verfahren zur Übertragung derartiger Informationen über die jeweils andere an der betreffenden Verbindung beteiligte Fernsprechteilnehmerstelle ist beschrieben in der DE-OS 30 29 661. Zu diesem Zweck ist u.a. ein Kennungszeichenspeicher vorgesehen, der mit einem Kennungzeichengeber verbunden ist, und bewirkt, daß beim Zustandekommen einer Verbindung die beiden miteinander verbundenen Teilnehmer sich gegenseitig automatisch vorstellen, in dem sie ihre Identität zu der jeweils anderen Teilnehmerstelle senden.

Bei Fernsprechvermittlungsanlagen ist es wichtig, daß jedem Anschlußorgan eine bestimmte Rufnummer zugeordnet werden kann und daß bei dieser Rufnummernzuordnung freizügig verfahren werden kann. Moderne Fernsprechvermittlungsanlagen haben deshalb eine sogenannte freie Rufnummernzuordnung, womit einem Teilnehmeranschluß praktisch jede im Rufnummernvorrat zur Verfügung stehende Rufnummer zugeschaltet werden kann. Eine Schaltungsanordnung, bei der diese Aufgabe durch steckbare Kontakte gelöst wird, ist angegeben in der DE-OS 26 35 544. Es sind hier pro Teilnehmeranschluß Kontakte vorgesehen, die mit steckbaren Isolierkörper auftrennbar sind und mit einer individuellen Rangierverdrahtung wahlweise mit anderen Kontakten verbindbar sind. In zentral gesteuerten Fernsprechvermittlungsanlagen, insbesondere bei solchen, die mit Programmen gesteuert werden, werden derartige Beziehungen zwischen Rufnummer und Teilnehmeranschluß in Speichern angegeben.

Die Information darüber, unter welcher Rufnummer ein Teilnehmeranschlußorgan erreichbar ist, wird also entsprechend dem vorher angegebenen Stand der Technik ausschließlich in der Vermittlungsanlage selbst in irgend einer Form gespeichert. Das hat zur Folge, daß bei Änderungen von Rufnummern entweder Rangierfelder geändert werden müssen, oder durch eine erneute Speichereingabe an zentraler Stelle die neue Anschlußsituation festgelegt werden muß. Auch bei Veränderungen, die nur vorübergehend Bestand haben, sind derartige Eingriffe an zentraler Stelle notwendig, die außerdem nur von Fachpersonal durchgeführt werden können.

Die Aufgabe der Erfindung besteht darin, ein Verfahren anzugeben, womit von der Teilnehmerstelle aus eine Rufnummernzuordnung dauernd oder vorübergehend erreicht werden kann, ohne daß an zentraler Stelle Eingriffe notwendig sind. Es ist außerdem Aufgabe der Erfindung, Voraussetzungen zu schaffen, mit denen eine Reihe von den Fernsprechkomfort erhöhenden Merkmalen verwirklicht werden können. Die Lösung dieser Aufgabe geschieht durch eine Merkmalskombination, wie sie im Patentanspruch 1 angegeben ist.

Damit wird in vorteilhafter Weise erreicht, daß eine Änderung von Rufnummern nicht unbedingt an zentraler Stelle vorgenommen werden muß. Besonders bei vorübergehenden Änderungen oder bei Rufumleitungen, Rufweiterleitungen usw. bei einzelnen Anschlüssen ist das Verfahren sehr geeignet, weil keine Fachkenntnisse notwendig sind, um die Anschlußdaten einem Fernsprechteilnehmeranschluß zuzuordnen.

Die in den Unteransprüchen angegebenen Weiterbildungen der Erfindung zeigen weitere Möglichkeiten auf, wie das erfinderische Verfahren im einzelnen ausgestaltet sein kann, und welche Merkmale bei Anwendung des Verfahrens außerdem noch verwirklicht werden können.

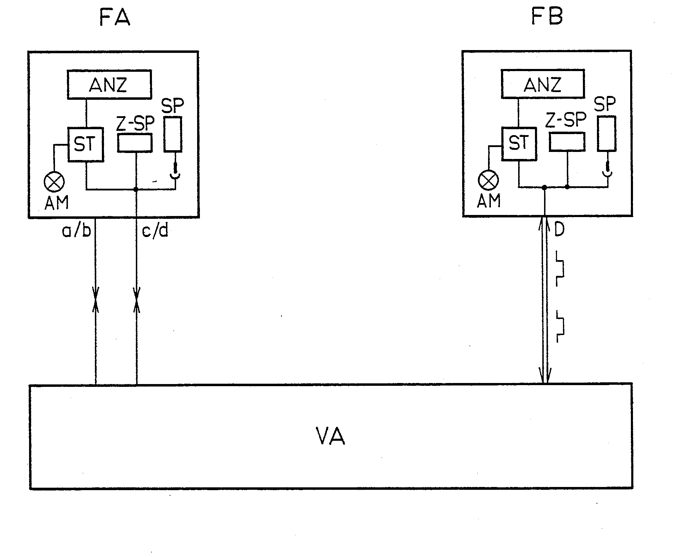

Ein Ausführungsbeispiel der Erfindung wird nachfolgend anhand einer Zeichnung näher erläutert. In der Zeichnung ist schematisch dargestellt, wie Fernsprechapparate FA und FB an eine Vermittlungsanlage VA angeschlossen sind. Der eine Fernsprechapparat FA ist dabei in herkömmlicher Weise derart angeschlossen, daß neben den Sprechadern a/b noch ein weiteres Adernpaar c/d vorhanden ist. Über dieses weitere Adernpaar werden Teilnehmerinformationen von den Speichereinrichtungen SP und Z-SP zur Vermittlungsanlage hin und auch in umgekehrter Richtung übertragen. Der andere an die Vermittlungsanlage angeschlossene Fernsprechapparat

0123890

FB ist über eine digital betriebene Anschlußleitung D angeschlossen, so daß die Teilnehmerinformationen, die von den Speichern kommen oder zu den Speichern hin übertragen werden müssen, zeitlich in anderen Kanälen gesendet und empfangen werden, wie die Sprachinformation. Die jeweils gewählte Art der Anschlußleitung hängt von der Beschaffenheit der Vermittlungsanlage VA und von der Art des jeweiligen Fernsprechapparates ab.

Für das erfindungsgemäße Verfahren sind als wesentliche Bestandteile im Fernsprechapparat Speichermittel SP steckbar angeordnet, dabei kann es sich um programmierbare Halbleiterspeicher PROM handeln, die auf einer Leiterplatte angeordnet sind und in eine Steckvorrichtung eingeschoben werden. Es ist jedoch auch möglich, als steckbares Speichermedium eine Magnetkarte zu benutzen, wenn im Fernsprechapparat ein entsprechendes Lesegerät eingebaut ist. Außer den steckbaren Speichermitteln SP kann noch ein fest eingebauter Zwischenspeicher Z-SP im Fernsprechapparat angeordnet sein.

Zur Steuerung der Schreib- und Lesevorgänge in den besagten Speichern, sowie zum Betrieb von Anzeigeeinrichtungen und zur Steuerung von nicht dargestellten weiteren Merkmalen dient eine Steuereinrichtung ST. Es ist eine Anzeigeeinrichtung ANZ vorgesehen, womit der Inhalt der Speichereinrichtungen sichtbar wiedergegeben werden kann. Außerdem wird von der Steuereinrichtung ein Anzeigemittel AM eingeschaltet, wenn neue Informationen von der Vermittlungsanlage VA zu einem Fernsprechapparat FA,FB übertragen wurde.

Anhand einiger Funktionsbeispiele soll nun beschrieben werden, wie die Erfindung im praktischen Betrieb eingesetzt wird. Zunächst sei angenommen, daß ein Fernsprechapparat FA oder FB neu eingerichtet wird oder eine neue Rufnummer erhalten soll. Der Inhaber dieses Fernsprechanschlusses braucht dann nur ein auf seinen Namen speziell beschriebenes Speichermittel in den Apparat einzuführen, das u.a. als wichtigsten Speicherinhalt die dem Anschluß zuzuordnende Teilnehmerrufnummer enthält. Der Inhalt des Speichermittels SP muß dann zur Vermittlungsanlage VA übertragen werden. Dies kann, ohne daß besondere Bedienungsmaßnahmen erforderlich sind, einfach dadurch bewirkt werden, daß der Handapparat abgenommen wird, wenn eine Verbindung aufgebaut werden soll. Die Vermittlungsanlage VA kann dann den Inhalt des Speichermittels SP abrufen, bevor die zum Aufbau einer Verbindung notwendigen Maßnahmen eingeleitet werden. Dieser Informations-Abruf kann beispielsweise in nicht dargestellter Weise dadurch eingeleitet werden, daß durch eine besondere Berechtigung des Anschlusses von der zentralen Steuerung der Vermittlungsanlage VA aus geprüft wird, ob für diesen Teilnehmer eine Rufnummer vorliegt. Ist dies nicht der Fall, so wird der besagte Informations-Abruf durchgeführt.

Je nach Ausgestaltung der Steuereinrichtung ST im Fernsprechapparat FA oder FB kann auch bereits mit dem Einstecken des Speichermittels SP ein besonderes Kennzeichen erzeugt werden, das zur Vermittlungsanlage VA gesendet wird, um einen Abruf der eingespeicherten Teilnehmerinformationen zu bewirken.

In der Vermittlungsanlage VA kann als zusätzliches Merkmal vorgesehen sein, daß die mit Speichermitteln SP ausgestatteten Fernsprechapparate FA, FB routinemäßig abgefragt werden, um den jeweils neuesten Speicherinhalt in den zentral angeordneten Speichern der Vermittlungsanlage einzuschreiben. Dieser Vorgang könnte bei freier Steuereinrichtung der Vermittlungsanlage VA durchgeführt werden, also vorwiegend in verkehrschwachen Zeiten. In diesem Fall ist jedoch nicht garantiert, daß die Änderung einer Rufnummer sofort wirksam wird.

Falls darauf Wert gelegt wird, daß der neue Inhalt des Speichermittels SP sofort wirksam wird, und die bereits beschriebene direkte Abgabe eines besonderen Kennzeichens beim Stecken des Speichermittels SP aus irgendwelchen Gründen nicht möglich ist, so könnte am Fernsprechapparat FA, FB eine besondere Taste vorgesehen sein, oder eine der bereits vorhandenen Tasten zur Abgabe eines diesbezüglichen Kennzeichens benutzt werden.

Wenn die Vermittlungsanlage VA die neuen Teilnehmerinformationen übernommen hat, wird sofort die neue Rufnummer einschließlich aller sonstigen Merkmale, wie Berechtigungen und Zusatzfunktionen für diesen Anschluß wirksam. Dies bedeutet, daß ab sofort alle Anrufe unter der betreffenden Rufnummer zu diesem Anschluß geschaltet werden, und daß abgehende Gespräche unter der betreffenden Rufnummer geführt werden können.

Wenn die Merkmale im Fernsprechapparat FA, FB und in der Vermittlungsanlage VA so ausgestaltet sind, daß der Betrieb des betreffenden Anschlusses unmittelbar von der Zuordnung der Anschlußdaten abhängig ist, so kann das Entfernen des steckbaren Speichermittels SP dazu führen, daß der Anschluß ab sofort gesperrt ist, wenn eine der vorher beschriebenen Maßnahmen anschließend eingeleitet wird. Der Anschluß wird dann von seiten der Vermittlungsanlage VA so behandelt, als sei er unbeschaltet. Bei einer derartigen Verfahrensweise hat der Teilnehmer die Möglichkeit, durch Entfernen des ihm persönlich zugeordneten Speichermittels SP, das neben der Rufnummer und den Teilnehmeranschluß-Merkmalen auch noch weitere persönliche Daten enthalten kann, den Fernsprechapparat FA,FB vor unbefugtem Benutzen zu schützen.

Wenn aber ein Fernsprechapparat FA,FB auch dann benutzbar bleiben soll, wenn kein steckbares Speichermittel SP sich am oder im Apparat befindet, so ist ein fest eingebauter Zwischenspeicher Z-SP vorgesehen. In diesem Fall braucht das steckbare Speichermittel SP nur bei einer Änderung von Daten vorübergehend eingesteckt zu werden. Die in dem steckbaren Speichermittel SP vorhandenen Daten werden dann mit Hilfe der im Fernsprechapparat FA,FB vorhandenen Steuerung ST zunächst in den Zwischenspeicher Z-SP eingeschrieben und gelangen erst von dort zur Vermittlungsanlage VA. Danach kann das steckbare Speichermittel SP wieder entfernt werden, und der Fernsprechapparat FA,FB ist trotzdem mit den im Zwischenspeicher Z-SP befindlichen Informationen betriebsbereit.

Das Vorsehen eines fest eingebauten Zwischenspeichers Z-SP empfiehlt sich dann, wenn neben den dem Fernsprechteilnehmeranschluß bereits zugeordneten Anschlußdaten noch weitere einen anderen Fernsprechteilnehmeranschluß kennzeichnenden Anschlußdaten von einem Fernsprechapparat FA,FB der Vermittlungsanlage VA mitgeteilt werden sollen, wie dies im folgenden beschrieben wird. Unter den zuvor beschriebenen Voraussetzungen ist es möglich, daß Rufumleitungen von dem Anschluß aus aktiviert werden, zu dem die Anrufe umgeleitet werden sollen. Wenn also beispielsweise ein Vorgesetzter zu einem Sachbearbeiter zu einer Besprechung geht, und ihm wichtige Anrufe nicht verloren gehen sollen, so nimmt er sein Speichermittel SP dorthin mit und steckt es in den dortigen Fernsprechappart ein. Da dieser Fernsprechapparat FA,FB voraussetzungsgemäß einen Zwischenspeicher Z-SP enthält, werden die bereits diesem Fernsprechteilnehmeranschluß zugeordneten Anschlußdaten nicht gelöscht, wenn über das neue eingesteckte Speichermittel SP neue Anschlußdaten zur Vermittlungsanlage gesendet werden. Dies hat zur Folge, daß bei diesem Fernsprechapparat FA,FB neben den umgeleiteten Anrufen auch die eigenen Anrufe empfangen werden können. Auch abgehende Gespräche können geführt werden, jedoch ist bei gebührenpflichtigen Gesprächen darauf zu achten, daß die anfallende Gesprächsgebühr dem richtigen Teilnehmeranschluß zugeordnet wird. Deshalb ist für diesen Fall ein nicht näher dargestelltes Umschaltemittel vorgesehen, das zu Beginn einer abgehenden Gesprächsverbindung betätigt wird, um festzulegen, unter welcher Rufnummer bzw. Anschlußnummer das abgehende Gespräch geführt wird. Innerhalb der Vermittlungsanlage VA ist es dann möglich, die anfallende Gesprächsgebühren richtig zuzuordnen. Bei einem derartigen Verfahren ist es also wie beschrieben möglich, mindestens vorübergehend die Anschlußdaten zweier Fernsprechteilnehmeranschlüsse einem einzigen Fernsprechapparat FA,FB zuzuordnen. Mit Hilfe der Anzeigemittel kann außerdem noch gekennzeichnet werden, für welchen Anschluß ein ankommender Anruf bestimmt ist. Auch beim Führen eines abgehenden Gespräches kann die Rufnummer angezeigt werden, unter der das Gespräch geführt wird. Ebenso ist es möglich, je nach Ausstattung der Anzeigeeinrichtung ANZ die einlaufende Gebühreninformation diesem Anschluß zugeordnet sichtbar zu machen.

Zum Aufheben einer wie zuvor beschrieben eingeleiteten Rufumleitung gibt es mehrere Möglichkeiten. Zum Löschen des Speicherbereichs im Zwischenspeicher Z-SP, der die zusätzlichen Anschlußdaten aufgenommen hatte, kann bei dem Fernsprechapparat FA,FB zu dem Anrufumleitung bestand, eine dafür vorgesehene Löschtaste betätigt werden. Das Löschen des betreffenden Speicherbereiches kann auch erreicht werden, wenn das Speichermittel SP des eigenen Anschlusses vorübergehend eingesteckt wird, so daß der gesamte Zwischenspeicher Z-SP neu überschrieben wird, wobei die Anschlußdaten für den zweiten, den umgeleiteten Anschluß gelöscht werden. Das Aufheben der Rufumleitung ist dann vollzogen, wenn die entsprechenden neuen Teilnehmerinformationen zur Vermittlungsanlage VA übertragen worden sind. Dies könnte auch dadurch bewirkt werden, daß am Fernsprechapparat FA,FB dessen Anrufe umgeleitet sind, erneut das Speichermittel SP eingesetzt wird. Wenn dann von der Vermittlungsanlage VA aus das Abrufen der Daten aufgrund der Abgabe eines besonderen Kennzeichens vom Fernsprechapparat aus veranlaßt wird, ist die Rufumleitung aufgehoben.

Die Durchführung einer Rufumleitung ist auch von dem Anschluß aus möglich, dessen Anrufe umgeleitet werden sollen. Zu diesem Zweck wird die Rufnummer des Anschlusses, wohin umgeleitet werden soll über das Speichermittel SP oder den eingebauten Zwischenspeicher Z-SP von dem betreffenden Fernsprechapparat aus zur Vermittlungsanlage VA gebracht. Hierbei ergibt sich der Vorteil, daß die zur Rufumleitung notwendigen Teilnehmerinformationen ohne in Anspruchnahme zentraler Speicherkapazität im Apparat gespeichert bleiben können und erst bei einem tatsächlich vorliegenden Anruf zum Zwecke einer internen oder externen Rufumleitung zur Vermittlungsanlage übertragen werden müssen. Bei einer darartigen Verfahrensweise ergibt sich außerdem die Möglichkeit, eine Rufumleitung bzw. Rufweiterschaltung vorzunehmen, ohne daß die Informationen über den Teilnehmer, zu dem umgeleitet werden soll, zur Vermittlungsanlage VA gelangen müssen, um dort eingespeichert zu werden, damit eine Rufumleitung in bekannter Weise stattfinden kann. In diesem Fall wird der Fernsprechapparat FA,FB von sich auch aktiv, um einen ankommenden Anruf selbsttätig an die Stelle zu bringen, wohin er umgeleitet werden soll. Dies kann insbesondere bei Fernsprechnebenstellenanlagen dadurch geschehen, daß der ankommende Anruf zunächst automatisch entgegengenommen wird, so daß kurzzeitig Gesprächsverbindung besteht, und daran unmittelbar anschließend ein Rückfragekriterium von dem betreffenden Fernsprechapparat aus selbsttätig abgegeben wird. Im Anschluß daran wird die Umleitadresse in Form einer Rufnummer als Wahlinformation ausgesendet und sodann nach vollständiger Aussendung der Wahlinformation die erste Verbindung ausgelöst. Es erfolgt daraufhin automatisch die bei Fernsprechnebenstellenanlagen bekannte Umlegung. Bei einer dartigen Verfahrensweise wird die Steuereinrichtung der Vermittlungsanlage VA insofern entlastet, daß für die Durchführung von echten Rufumleitevorgängen keine besonderen Speicher- und Steuereinrichtungen vorhanden sein müssen, bzw. keine von den Grundmerkmalen abweichende Steuerungsprozeduren durchzuführen sind.

Weitere für einen Fernsprechteilnehmer vorteilhafte Merkmale lassen sich verwirklichen, wenn der fest eingebaute Zwischenspeicher Z-SP und die im Fernsprechapparat befindliche Steuereinrichtung ST so ausgestaltet sind, daß auch von der Vermittlungsanlage VA kommende Informationen empfangen und eingespeichert werden können. Dann ist es möglich, daß ein anrufender Teilnehmer für den anzurufenden Teilnehmer bestimmte Informationen beispielsweise durch Nachwahl auch dann eingeben kann, wenn keine Gesprächsverbindung zustande kommt, oder der Anschluß besetzt ist. Wenn in einem derartigen Fall der Zwischenspeicher Z-SP von einem Anrufer stammende Informationen aufgenommen hat, so wird von der im Fernsprechapparat befindlichen Steuereinrichtung ST ein besonderes Anzeigemittel AM eingeschaltet, um den Teilnehmer auf das Vorliegen einer Nachricht aufmerksam zu machen. Daraufhin kann der Teilnehmer, beispielsweise nach dem Beenden des vorher geführten Gespräches durch Betätigen einer nicht dargestellten Taste die Anzeige der eingespeicherten Nachricht in seiner Anzeigeeinrichtung ANZ veranlassen. Weiterhin ist es möglich, den Zwischenspeicher Z-SP und die Anzeigeeinrichtung ANZ zu benutzen, um den Teilnehmer über seinen Gesprächspartner oder über den Gebührenstand eines Anschlusses zu unterrichten.

P 3814
Gö/we
18.4.83

0123890

Telefonbau und Normalzeit GmbH, 6000 Frankfurt am Main,
Mainzer Landstrasse 128 - 146


Verfahren zur Zuordnung von Anschlußdaten für
Fernsprechteilnehmeranschlüsse

_____

P a t e n t a n s p r ü c h e

1. Verfahren zur Zuordnung von Anschlußdaten für Fernsprechteilnehmeranschlüsse, wobei Fernsprechapparate
mit eigenen elektronischen Speicher- und Steuereinrichtungen über besondere Leitungen an zentral gesteuerte Vermittlungsanlagen angeschlossen sind oder
zusätzliche Zeitkanäle zur Verfügung haben,
dadurch gekennzeichnet,
daß die im Fernsprechapparat (FA,FB) eingebauten und/
oder verübergehend eingebrachten Speichermittel (SP)
die eigene Rufnummer des Teilnehmers und weitere aus
Berechtigungs-, Funktionsmerkmalen sowie betriebsinternen Kennzeichnungen, ggf. auch Name und Adresse
des betreffenden Teilnehmers bestehende Teilnehmerdaten
enthalten, daß diese Teilnehmerinformationen unabhängig
von Wähl- und Sprachinformationen zur Vermittlungsanlage (VA) übertragen werden, wenn von dort aus ein
Abrufsignal gegeben wird, oder vom Fernsprechapparat
(FA,FB) aus ein Eingabesignal erzeugt wird, und daß
die so übertragenen Teilnehmerinformationen innerhalb
der Steuerung der Vermittlungsanlage (VA) in einen
für die Rufnummernzuordnung zuständigen Speicher gelangen, wobei die von vorübergehend eingebrachten
Speichermitteln (SP) kommenden Teilnehmerinformationen in einem im Fernsprechapparat fest eingebauten Zwischenspeicher (Z-SP) aufgenommen werden und von dort aus
zur Vermittlungsstelle gelangen.

2. Verfahren nach Anspruch 1,
dadurch gekennzeichnet,
daß als Speichermittel (SP) steckbare, individuell
programmierbare Festwertspeicher oder lesbare Karten
vorgesehen sind.

3. Verfahren nach Anspruch 1,
dadurch gekennzeichnet,
daß in den fest eingebauten Zwischenspeicher (Z-SP) Daten
auch durch Tastenbetätigungen, beispielsweise mit der
Wähltastatur eingebbar bzw. änderbar sind.

4. Verfahren nach Anspruch 1,
dadurch gekennzeichnet,
daß die in den Speichermitteln (SP) oder im Zwischenspeicher (Z-SP) befindlichen Teilnehmerinformationen beim
Aufbauen einer Fernsprechverbindung beim rufenden
und beim angerufenen Teilnehmer angezeigt werden können,
und zwar sowohl die Information über den eigenen Anschluß als auch die Information über die jeweiligen
Verbindungspartner, wenn diese zur Gegenstelle übertragen wird, und daß die Information über den eigenen
Anschluß jederzeit anzeigbar ist.

5. Verfahren nach Anspruch 1,
dadurch gekennzeichnet,
daß aufgrund einer Übertragung einer neuen Fernsprechrufnummer von einem Fernsprechapparat (FA,FB) aus zur
Vermittlungsstelle (VA) bei der Anwahl der betreffenden
Rufnummer die Anrufe generell zu diesem Teilnehmeranschluß gesteuert werden, bzw. Rufumleitungen oder
Rufweiterleitungen stattfinden, wenn die betreffende
Rufnummer auch noch dem bisherigen Teilnehmeranschluß
zugeordnet ist, daß dabei die Teilnehmerdaten wie
Berechtigungs- und Funktionsmerkmale berücksichtigt
werden, und daß in dem im Fernsprechapparat (FA,FB) befindlichen Zwischenspeicher (Z-SP) neben den neuen Teilnehmer-Informationen auch die bisherigen Teilnehmer-Informationen erhalten bleiben, wenn diese nicht ausdrücklich gelöscht werden, so daß der Teilnehmerapparat neben den umgeleiteten Anrufen auch nach wie vor eigene Anrufe empfangen kann.

6. Verfahren nach Anspruch 1,
dadurch gekennzeichnet,
daß eine zusätzliche Rufnummer als Umleitadresse in die Speichermittel (SP) oder den fest eingebauten Zwischenspeicher (Z-SP) anschlußbezogen eingebbar ist, wodurch ohne Inanspruchnahme zentraler Speicherkapazität diese Information im Apparat gespeichert bleibt und bei einem Anruf bewirkt wird, daß erst dann diese Information zum Zwecke einer internen oder externen Rufumleitung zur Vermittlungsanlage gelangt, indem beim Vorhandensein einer Umleitadresse in einem Speicher einer angerufenen Fernsprechstelle (FA,FB) veranlaßt wird, daß diese beim einem ankommenden Anruf sofort in den Gesprächszustand übergeht, unmittelbar daran anschließend ein Rückfragekriterium abgibt, sowie die Umleitadresse in Form einer Rufnummer als Wahlinformation aussendet und daran anschließend die Verbindung auslöst, so daß eine Umlegung zur umgeleiteten Stelle stattfindet.

7. Verfahren nach Anspruch 5,
dadurch gekennzeichnet,
daß eine Umschaltefunktion vorgesehen ist, deren Einstellung bei einer abgehenden Verbindung angibt, unter welcher Rufnummer die Verbindung aufgebaut wird, und daß dabei die zu der betreffenden Rufnummer gehörenden Teilnehmerdaten, insbesondere Berechtigungen berücksichtigt werden, wobei für die Umschaltefunktion eine besondere Taste vorgesehen ist, oder Tasten der Wähltastatur benutzt werden.

8. Verfahren nach einem der Ansprüche 1 oder 7,
dadurch gekennzeichnet,
daß beim Aufbauen abgehender Verbindungen vor der Abgabe von Wahlinformation die Teilnehmerinformationen aus den Speichermitteln (SP) oder dem Zwischenspeicher (Z-SP)ausgelesen und zur Vermittlungsanlage übertragen werden,und daß dies automatisch mit dem Abnehmen des Handapparates geschieht, wobei vorher ggf. die eine Umschaltefunktion auslösende Taste zu betätigen ist.

9. Verfahren nach Anspruch 1,
dadurch gekennzeichnet,
daß durch einen besonderen Steuervorgang von der zentralen Steuereinrichtung der Vermittlungsanlage (VA) aus die Zwischenspeicher (Z-SP7 und/oder Speichermittel (SP) der Fernsprechapparate (FA,FB) routinemäßig, beispielsweise in verkehrsschwachen Zeiten, abgefragt werden.

10. Verfahren nach dem Oberbegriff des Anspruchs 1,
dadurch gekennzeichnet,
daß von der Vermittlungsanlage (VA) aus für einen rufenden oder auch angerufenen Fernsprechapparat (FA,FB) bestimmte Informationen (Gebühreninformation, Teilnehmerinformation eines Gesprächspartners oder Anrufers) in die dem Fernsprechapparat (FA,FB) zugeordneten Speichermittel (SP) gebracht werden, wobei auch von einem weiteren, im Besetztfall anrufenden Teilnehmer per Nachwahl durchgegebene Informationen (z.B. Rückruf erwünscht) ebenfalls von den Speichermitteln (SP) oder dem Zwischenspeicher (Z-SP) aufgenommen werden, und daß ein optisches Anzeigemittel (AM) am Fernsprechapparat (FA,FB), beispielsweise Leuchtdiode vorgesehen ist, das nach dem Empfang von Informationen von der Vermittlungsanlage (VA) eingeschaltet wird und den Teilnehmer auf das Vorliegen von Meldungen hinweist.

P 3814
Gö/we
21.3.84

0123890

FA

ANZ

ST  Z-SP  SP

AM

a/b  c/d

FB

ANZ

ST  Z-SP  SP

AM

D

VA

Ɔ 3814